# EUROPÄISCHE PATENTANMELDUNG

(11) **EP 1 512 820 A2**
(43) Veröffentlichungstag der Anmeldung: **09.03.2005**
(21) Anmeldenummer: 04020748.2
(22) Anmeldetag: 01.09.2004
(51) Int. Cl.: E05F 15/00

(54) **Elektronisch gesteuerter Verletzungsschutz für einen bahngesteuerten Fensterheber, Verfahren zum Anpassen der Steuerungseinrichtung an eine gegebene Kinematik, sowie bahngesteuerter Fensterheber**

(30) Priorität: 02.09.2003 DE 10340286
(71) Anmelder: Brose Fahrzeugteile GmbH & Co. KG, Coburg, 96450 Coburg (DE)
(72) Erfinder: Schindler, Thomas, 96269 Grossheirath (DE); Russ, Detlef, 98693 Ilmenau (DE); Buhlheller, Jürgen, 97478 Hainert (DE)

(57) **Zusammenfassung**

Die Erfindung betrifft einen elektronisch gesteuerter Verletzungsschutz für einen bahngesteuerten Fensterheber, wobei
- die Fensterscheibe aufgrund der durch die konstruktiv vorgegebene Kinematik des bahngesteuerten Fensterhebers zusätzlich zur Hauptschließrichtung Bewegungen in mindestens eine quer dazu verlaufende Raumachse ausführt,
- von einem, eine Antriebsbewegung sensierenden Sensor abgegebene Signale einer elektronischen Steuerungseinrichtung zugeführt werden, wobei in Abhängigkeit von den Sensorsignalen Steuerbefehle generiert werden, die der Steuerung des Antriebs dienen,
- über in der elektronischen Steuerungseinrichtung abgelegte Daten eine bestimmte Ansprechempfindlichkeit des Verletzungsschutzes einstellbar ist, so dass der Antrieb unter dem Einfluss vorgebbarer äußerer Einwirkungen (insb. Kräfte und/oder Beschleunigungen) abgeschaltet oder zum Reversieren veranlasst wird,
wobei
die Ansprechempfindlichkeit an die in verschiedenen Scheibenpositionen herrschenden kinematischen Verhältnisse hinsichtlich der Bewegungs- oder Kraftkomponenten in mindestens zwei Raumrichtungen angepasst ist.

## Beschreibung

Die Erfindung bezieht sich auf einen elektronisch gesteuerten Verletzungsschutz für einen bahngesteuerten Fensterheber, insbesondere mit Seilantrieb. Des Weiteren wird ein Verfahren zur Steuerung durch eine Steuerungseinrichtung des bahngesteuerten Fensterhebers sowie eine Kinematik für einen bahngesteuerten Fensterheber beschrieben.

So genannte indirekt-erkennende Einklemmschutz-Systeme sind beispielsweise aus DE 30 43 118 A1, EP 0 359 853 B1, DE 43 15 637 A1 und DE 197 11 979 A1 bekannt. Diese Systeme nennt man indirekt-erkennend, weil das Erkennen des Einklemmens eines Objekts nicht unmittelbar am Ort des Geschehens erfolgt (wie beispielsweise bei Verwendung einer entlang der Schließkontur verlegten elektrischen Kontaktleiste), sondern infolge dessen Rückwirkung über die Kraftkette des Verstellsystems auf den Antrieb, der mit einem Sensor in Wirkverbindung steht. Im Allgemeinen ist auf der Antriebswelle des Motors ein Ringmagnet befestigt, der in einem zugeordneten Hall-Sensor Signale generiert, die wiederum in einer elektronischen Auswerteeinheit bewertet werden. Sollte ein Einklemmfall auftreten, so ist mit einer charakteristischen Verzögerung der Verstellbewegung des Verstellteils (z.B. einer Fensterscheibe) zu rechnen, die über die mechanische Kopplung auch den Antrieb abbremst. Hierdurch verlängern sich die zeitlichen Perioden zwischen zwei aufeinander folgenden (Hall-)Signalen. Bei Überschreitung eines festgelegten Grenzwertes wird der Antrieb durch die Steuerungseinrichtung gestoppt und ggf. die Drehrichtung umgekehrt, um den Einklemmzustand wieder zu lösen.

Ein weiteres Beispiel sind einsträngige oder doppelsträngige Seilfensterheber mit im wesentlichen gerade verlaufender Führungsbahn, wie diese beispielhaft in DE 198 02 478 A1 und WO 98/50658 offenbart sind. Grundsätzlich muss hier jede vom elektronischen Verletzungsschutz erkannte Veränderung in der Dynamik des Verstellprozesses oder hinsichtlich der auftretenden Kräfte einer äußeren Einwirkung zugeordnet werden und deshalb - bei Überschreitung vorgebbarer Grenzwerte - auf einen Einklemmfall geschlossen werden.

Bei so genannten bahngesteuerten Fensterhebern, wie beispielsweise aus DE 34 45 000 A1 bekannt, wird die Fensterscheibe nicht im Wesentlichen geradlinig, sondern entlang einer Kurvenbahn bewegt, die sich zumindest in einer Ebene erstreckt; sie kann aber auch räumlich verlaufen und sogar Schwenkbewegungen um mehrere Achsen (um die X- und Y-Achse) initiieren. Diese zum Teil sehr komplexen Bewegungsabläufe werden durch eine Kombination von mehreren Führungsbahnen und darin eingreifenden Gleitern eines mit der Fensterscheibe verbundenen Mitnehmers gesteuert. Die Kraftübertragung erfolgt wegen der komplexen Bewegungsabläufe vorteilhafterweise über Seilantriebssysteme.

Bei derartigen Fensterhebern verändert sich die Stellung der Fensterscheibe zum Antrieb entlang des Verstellweges, wobei der antriebseitige Verstellweg in mehrere (wenigstens zwei) Komponenten verschiedener Raumachsen eines abtriebseitig resultierenden Verstellweges aufgesplittet wird. D.h., dass wenigstens zwei Bewegungen überlagert sind, z.B. eine transversale und eine Schwenk- bzw. Drehbewegung.

Der Erfindung liegt deshalb die Aufgabe zugrunde, ein indirekt-erkennendes Verletzungsschutzsystem für bahngesteuerte Fensterheber anzugeben.

Erfindungsgemäß wird die Aufgabe durch die Merkmale der unabhängigen Ansprüche gelöst. Vorteilhafte Weiterbildungen der Erfindung sind Gegenstand von Unteransprüchen.

Demnach wird die Empfindlichkeit des Ansprechens des Verletzungsschutzsystems für den bahngesteuerten Fensterheber derart in Abhängigkeit der Scheibenposition festgelegt bzw. eingestellt, dass einerseits eine vorgegebene maximale Einklemmkraft nicht überschritten und andererseits ein Fehlauslösen des Systems vermieden wird. Dabei ist die Ansprechempfindlichkeit an die in verschiedenen Scheibenpositionen herrschenden kinematischen Verhältnisse hinsichtlich der Bewegungs- oder Kraftkomponenten in mindestens zwei Raumrichtungen angepasst. Die Anpassung kann auf zwei verschiedenen Wegen erreicht werden:

Zum einen kann man bei gegebener Leistungsfähigkeit eines zur Verfügung stehenden Verletzungsschutzsystems die Kinematik des Fensterheber-Verstellsystems derart anpassen, dass für zwei beliebige unterschiedliche Punkte der Schließkante der Fensterscheibe die Differenz oder eine Verhältniszahl der Beträge der Geschwindigkeit (oder eines mit der Geschwindigkeit korrelierten Parameters) entlang der selben Raumachse einen definierten Wert nicht über- oder unterschreitet, wobei der definierte Wert die Grenze der Erfüllbarkeit der Funktionsbedingungen des elektronischen Verletzungsschutzsystems angibt, d. h. dass hinreichend sicher eine Fehlerkennung eines Einklemmfalls sichergestellt und ein Überschreiten einer maximal zulässigen Einklemmkraft ausgeschlossen wird. Zum anderen kann man - in analoger Weise - die Leistungsfähigkeit des Verletzungsschutzsystems an eine vorgegebene Kinematik des Fensterheber-Verstellsystems anpassen. D. h., dass die Ansprechempfindlichkeit des Verletzungsschutzsystems an die in den verschiedenen Verstellpositionen der Fensterscheibe unterschiedlichen kinematischen Bedingungen angepasst sind, so dass die Bewegungsabläufe der Fensterscheibe entlang der verschiedenen Raumachsen, einschließlich der Schwenkbewegungen, nicht zum Über- bzw. Unterschreiten einer oben bezeichneten und für das einzusetzende Verletzungsschutzsystem charakteristischen Differenz oder Verhältniszahl führen.

Darüber hinaus weist der elektronisch gesteuerte Verletzungsschutz vorzugsweise ein signalgenerierendes Element auf, z.B. einen Ringmagneten, der mit einem Element des Antriebs, insbesondere mit der Motorachse, verbunden ist. Das signalgenerierende Element steht vorteilhafterweise in Wirkbeziehung mit einem Sensor, z.B. einem Hall-Sensor. Eine andere Möglichkeit besteht in der Messung des Momentanstromes mit einem Stromsensor, der in erster Näherung proportional zum Antriebsmoment ist. Die vom Sensor abgegebenen Signale werden einer elektronischen Steuerungseinrichtung zugeführt, wo aufgrund der Sensorsignale Steuerbefehle generiert werden, die der Überwachung des Verstellvorganges und Steuerung des Antriebs dienen, so dass der Antrieb unter dem Einfluss vorgebbarer äußerer Einwirkungen (insb. Kräfte und/oder Beschleunigungen) abgeschaltet oder zum Reversieren veranlasst werden kann.

Ein weiterer Aspekt der Erfindung ist ein bahngesteuerter Fensterheber eines Kraftfahrzeugs mit einer Verstellkinematik zur Verstellung der Fensterscheibe in mehreren Raumrichtungen, wie sie beispielsweise zuvor beschrieben sind. Dabei sind mehrere Punkte der Scheibenkante im Verstellverlauf maßgebend. Für Punkte der Scheibenkante, für die in mehreren Verstellpositionen ein Einklemmen zwischen diesen Punkten der Scheibenkante und der Scheibendichtung möglich ist, soll eine Einklemmung detektiert werden. Für eine mögliche Detektion darf ein Umsetzungsverhältnis eines Weges eines Krafteinleitungspunktes in zumindest einer Raumrichtung zu einem Verstellweg jedes Punktes der Scheibenkante in derselben Raumrichtung einen Verhältniswert, der kleiner oder gleich 2 ist, für jede dieser mehreren Verstellposition nicht überschreiten. Je nach Verstellposition und gewählten Punkt auf der Scheibenkante, kann das Umsetzungsverhältnis dabei ein Übersetzungsverhältnis oder ein Untersetzungsverhältnis sind.

Zwar kann prinzipiell die Raumrichtung, in der das Umsetzungsverhältnis bestimmt wird, in Y-Richtung oder in X-Richtung liegen, in einer besonderes bevorzugten Weiterbildung der Erfindung liegt die Raumrichtung für die Bestimmung des Umsetzungsverhältnisses zumindest in Z-Richtung. Dabei repräsentiert die X-Richtung die Fahrzeuglängsachse, die Y-Richtung die horizontale Fahrzeugquerachse und die Z-Achse die vertikale Achse. Alternativ kann die Raumrichtung auch als Vektor im X-Y-Z-Raum liegen und ist beispielsweise über den Verstellweg konstant. In einer alternativen Ausgestaltungsform der Erfindung kann die Raumrichtung auch in der Kraftwirkungsrichtung des Antriebs liegen, so dass sich die Raumrichtung über den Verstellweg ändern kann.

Bevorzugte Ausgestaltungen der Erfindung sehen vor, dass der Verhältniswert kleiner 1,8 und weiter bevorzugt kleiner 1,5 ist. Ein kleinerer Verhältniswert ist insbesondere dann vorteilhaft, wenn die Differenz zwischen der maximal zulässigen Einklemmkraft und der gerade noch detektierbaren Einklemmkraft gering ist. Ist der Verhältniswert zu klein können kleine auftretende Schwergängigkeiten bereits zu einem Fehlreversieren führen. Demzufolge unterschreitet in einer vorteilhaften Weiterbildung der Erfindung das Umsetzungsverhältnis einen Minimalwert von 0,3, vorzugsweise von 0,5 nicht. Ebenfalls ist es vorteilhaft, dass der Minimalwert und der Verhältniswert voneinander abhängig sind, beispielsweise eine konstante Differenz aufweisen.

Die Erfindung weiterbildend ist für Punkte der Scheibenkante, für die ein Einklemmen zwischen dem jeweiligen Punkt und der Scheibendichtung in der betreffenden Verstellposition nicht möglich ist, vorgesehen, dass diese Punkte durch ein Bauelement der Kraftfahrzeugtür, insbesondere durch eine Türbrüstung oder durch eine Scheibendichtung, für den Verletzungsschutz verdeckt sind. Kritische Klemm- und Scherbewegungen können so vorteilhafte unter diesen Abdeckungen vermieden werden.

Vorteilhafterweise ist eine elektronische Steuerungseinrichtung zur Detektion eines Einklemmfalls vorgesehen, wobei für Verstellpositionen in denen das Umsetzungsverhältnis den Verhältniswert überschreitet, durch eine Elektronik der Einklemmfall anhand einer elektrischen oder mechanischen Systemantwort detektierbar ist. Eine derartige Systemantwort ist die Antwort des mechanischen und/oder elektronischen Systems auf den akuten Einklemmfall. Dies kann beispielsweise mittels einer mechanischen Verklemmung der Verstellbewegung oder durch eine detektierbare Rüttelbewegung erfolgen, die die Detektion des Einklemmfalls ermöglichen und vorzugsweise ein Reversieren der Antriebsbewegung bewirken.

Vorteilhafterweise sind in einer vorteilhaften Ausgestaltung der Erfindung Führungsbahnen derart ausgestaltet, dass für Verstellpositionen in denen das Umsetzungsverhältnis den Verhältniswert überschreitet, ein auf die Scheibe durch den Einklemmfall wirkendes Drehmoment durch die Führungsbahnen abgestützt wird und vorzugsweise zu einem Verklemmen von Gleitern innerhalb der Führungsbahnen führt, das auf den Antrieb als signifikante Abbremsung wirkt.

In einer anderen Weiterbildung der Erfindung ist vorgesehen, dass für Verstellpositionen in denen das Umsetzungsverhältnis den Verhältniswert überschreitet, die Verstellkraft durch eine Elektronik begrenzt ist. Dies kann beispielsweise durch die Begrenzung, Regelung und/oder Steuerung des Motorstromes auf einen Maximalwert erzielt werden. Beispielsweise wird der Motorstrom mittels einer Strommessung und einem pulsweitenmodulierten Steuersignal auf einen Maximalstrom begrenzt oder konstant geregelt.

Alternativ die Erfindung weiterbildend ist für Verstellpositionen in denen das Umsetzungsverhältnis den Verhältniswert überschreitet, die Verstellgeschwindigkeit durch eine Elektronik reduziert. Dies kann mittels eines Leistungshalbleiters erfolgen, der durch ein pulsweitenmodulierten Steuersignal angesteuert wird, so das der Motor mit einer reduzierten Leistung betrieben wird.

Ein weiterer Aspekt der Erfindung ist ein bahngesteuerter Fensterheber eines Kraftfahrzeugs mit einer Verstellkinematik zur Verstellung der Fensterscheibe in mehreren Raumrichtungen. Für Punkte einer Scheibenkante ist in mehreren Verstellpositionen ein Einklemmen zwischen diesen Punkten der Scheibenkante und der Scheibendichtung möglich. Für diese Punkte überschreitet ein Umsetzungsverhältnis eines Weges eines Krafteinleitungspunktes in zumindest einer Raumrichtung zu einem Verstellweg jedes Punktes der Scheibenkante in derselben Raumrichtung einen Verhältniswert, für jede dieser mehreren Verstellpositionen nicht. Dabei ist der Verhältniswert aus dem Verhältnis einer maximal zulässigen Einklemmkraft an der Scheibenkante und einer am Krafteinleitungspunkt minimal sensierbaren Kraft für den Einklemmfall gebildet. Zur Bildung ist der Verhältniswert zu dem Verhältnis der Kräfte über eine Konstante beispielsweise proportional.

Nachfolgend wird die Erfindung anhand von Ausführungsbeispielen näher erläutert. Es zeigen:
- Figur 1: Schematische Darstellung einer Fensterscheibe in der X-Z-Ebene mit einem Mitnehmer;
- Figur 2: Schematische Darstellung der Geschwindigkeitsprofile von zwei ausgewählten Punkten der Schließkante einer Fensterscheibe sowie des Krafteinleitungspunktes des Mitnehmers bei einer bestimmten Kinematik des Verstellsystems;
- Figur 3: Wie Figur 2, jedoch bei einer anderen Kinematik des Verstellsystems;
- Figur 4: Schematische Darstellung der Bewegung eines Punktes der Fensterscheibe in der X-Z-Ebene;
- Figur 5: Beispiel für einen bahngesteuerten Fensterheber mit Mitnehmer und Fensterscheibe;
- Figur 6: Grundplatte eines bahngesteuerten Fensterhebers mit drei sich stark unterscheidenden Führungsbahnen.

Während bei Seil-Fensterhebern mit im Wesentlichen geradliniger Führungsbahn das Übersetzungsverhältnis zwischen Antrieb und Fensterscheibe konstant bleibt, ändern sich bei überlagerten Bewegungsabläufen eines bahngesteuerten Fensterhebers die Übersetzungsverhältnisse für Kräfte und Wege nicht nur für die Fensterscheibe insgesamt, sondern auch für verschiedene Punkte ihrer Schließkante. Dies führt scheinbar auch zu sich ändernden Federraten (Federsteifigkeit) des Verstellsystems, wodurch für ein indirekt-erkennendes Verletzungsschutzsystem ein Problem zu überwinden ist, dass eine variable Federrate dem Funktionsprinzip solcher Überwachungssysteme widerspricht und deren Einsatz im ersten Ansatz entgegensteht. Unter einer Federrate eines Fensterheber-Verstellsystems wird dabei das Verhältnis von Kraftanstieg und Verstellweg beim Auftreffen der Schließkante auf einen starren Körper verstanden.

An unterschiedlichen Scheibenpositionen einer Fensterscheibe eines bahngesteuerten Fensterhebers herrschen zum Teil sehr unterschiedliche kinematische Verhältnisse mit entsprechend unterschiedlichen Einklemm-Erkennungsbedingungen, so dass das System nicht ohne weiteres zwischen den äußeren Einflüssen und vom Verstellsystem aufgeprägten Veränderungen unterscheiden kann. Sofern ein Verletzungsschutzsystem zwingend erforderlich ist, kann der bahngesteuerte Fensterheber mit einem sog. direkt-erkennenden System (z.B. elektrische Kontaktleiste) kombiniert werden.

Mindestens zwei verschiedene Punkte des Verstellteils weisen für unterschiedliche diskrete Verstellpositionen verschiedene Unter- oder Übersetzungsverhältnisse der Antriebskraft und des vom Antrieb direkt ausgehenden Antriebsverstellweges auf, woraus schließlich für die bezeichneten verschiedenen Punkte des Verstellteils unterschiedliche Geschwindigkeits- und Kraftvektoren resultieren. Dies hat vor allem seine Ursache in seitwärts (in X-Richtung) gerichteten Bewegungen, die von der Hauptverstellrichtung (Z-Richtung) abweichen und/oder von einer Schwenkbewegung der Fensterscheibe um die Querachse (Y-Achse) überlagert sein können.

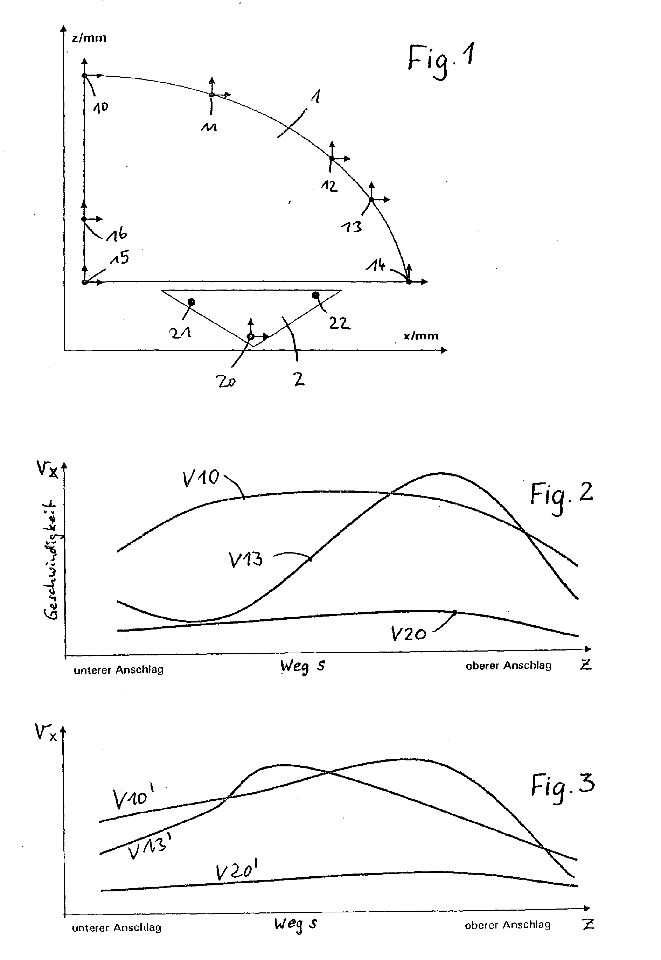

Figur 1 deutet schematisch an, dass sich jeder Punkt 10 - 16 der Fensterscheibe 1 hinsichtlich seiner Bewegungsdaten von anderen Punkten unterscheiden kann. Dies gilt auch für die Führungspunkte 21 - 22 des Mitnehmers 2, dessen Bewegung von den Führungsbahnen 30 - 32 gesteuert und direkt auf die Fensterscheibe 1 übertragen wird.

In den Figuren 2 und 3 sind jeweils für die Punkte 10 und 13 der Fensterscheibe 1 und den Krafteinleitungspunkt 20 des Mitnehmers 2 Geschwindigkeitsprofile schematisch dargestellt, welche die Veränderung der Geschwindigkeitskomponente in X-Richtung in Abhängigkeit von der Verstellposition in Z-Richtung, also der Hauptverstellrichtung, zeigt. Während die Geschwindigkeitskomponenten V20, V20' des Krafteinleitungspunktes 20 im Wesentlichen konstant verläuft, verändern sich die Geschwindigkeitskomponenten V10, V10', V13, V13', V20, V20' zum Teil ganz erheblich. Diese Veränderungen beeinflussen die Funktionalität des Verletzungsschutzsystems in hohem Maße und müssen deshalb bei der Festlegung einer positionsabhängigen Ansprechempfindlichkeit berücksichtigt werden.

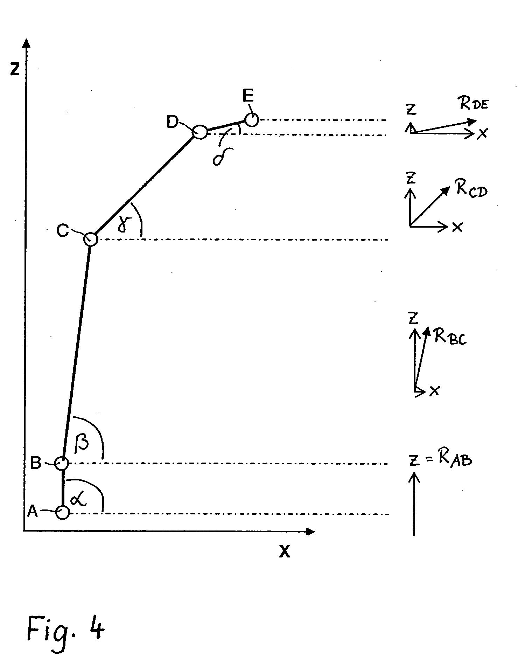

Figur 4 zeigt in verschiedenen Abschnitten zwischen den Punkten A - E die zugehörigen resultierenden Bewegungsvektoren R. Im vorliegenden Beispiel beträgt der Winkel Alpha 90°, so dass die Resultierende R_{AB} mit der Bewegungskomponente in Z-Richtung identisch ist. In den nachfolgenden Abschnitten werden die Neigungswinkel Beta, Gamma und Delta immer spitzer. Dies hat zur Folge, dass die im Wesentlichen konstante resultierende Bewegungskomponente R mehr und mehr zugunsten der Bewegungskomponente in X-Richtung umverteilt wird. Diese Umverteilung hat erhebliche Auswirkungen auf die scheinbare Steifigkeit (Federkonstante) des Verstellsystems und damit auf das Ansprechverhalten des elektronischen Verletzungsschutzsystems. Während des Schließens der Fensterscheibe 1 ändert sich der Bewegungsvektor des Scheibenschwerpunktes, woraus eine sich über den Hub ändernde Auflösung des indirekt-erkennenden Verletzungsschutzsystems resultiert.

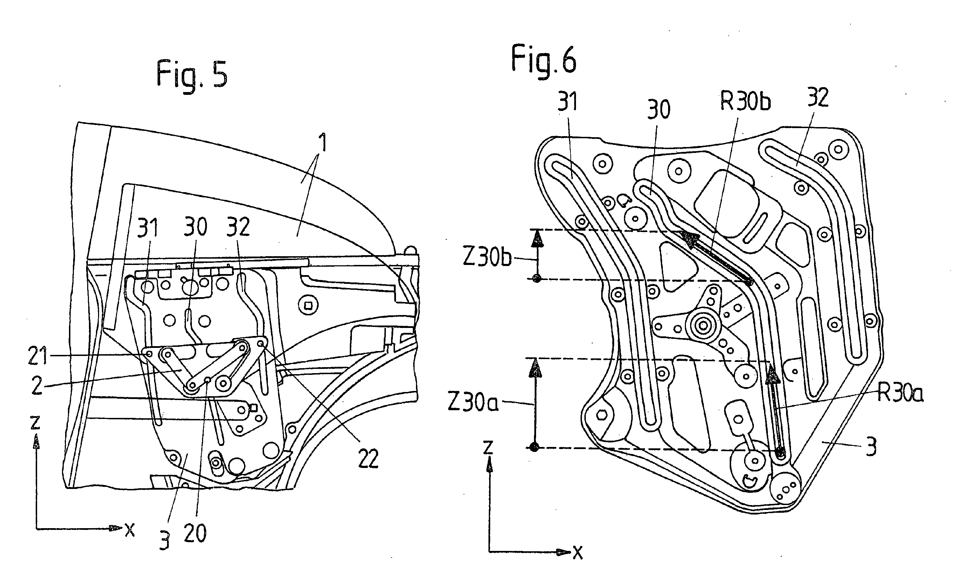

Aus Figur 5 ist der Ausschnitt einer Fahrzeugkarosserie erkennbar, in die die Grundplatte 3 eines bahngesteuerten Fensterhebers eingebaut ist. In deren Führungsbahnen 30, 31, 32 sind Führungspunkte 20, 21, 22 in Form von Gleitern geführt, die mit dem Mitnehmer 2 fest verbunden sind. Jede vom Antriebssystem auf den Mitnehmer 2 übertragene translatorische Verschiebebewegung, Schwenk- oder Drehbewegung wird direkt auf die Fensterscheibe 1 übertragen, die hier in zwei verschiedenen Positionen abgebildet ist. Gut erkennbar ist auch, dass für das Schließen der Fensterscheibe - neben der Verschiebebewegung in Z-Richtung - auch eine erhebliche Bewegung in X-Richtung ausgeführt werden muss.

Anhand von Figur 6 soll noch einmal deutlich gemacht werden, wie groß die Veränderungen der Bewegungsdaten während des Verstellprozesses sein können. Während der resultierende Bewegungsvektor R30a in einer unteren Verstellphase im Wesentlichen mit dem Bewegungsvektor Z30a in Z-Richtung übereinstimmt, weist der Bewegungsvektor Z30b in einer oberen Phase nur noch etwa die Hälfte des anfänglichen Wertes auf, obwohl der resultierende Bewegungsvektor R30b seinen Wert nicht oder kaum verändert hat.

Die Hebelverhältnisse in der Kinematik sollten nicht zur Folge haben, dass an zwei Messpunkten der Scheibenkante sich die Kraftkomponenten um mehr als 60 Newton unterscheiden, da anderenfalls das Anpassungspotential der heute im Einsatz befindlichen Verletzungsschutzsysteme nicht ausreichen könnte. Die bei der Umlenkung von Bewegungen auftretenden Beschleunigungen an einem beliebigen Scheibenmesspunkt in Bezug auf den Krafteinleitungspunkt des Mitnehmers 2 sollten aus dem selben Grund 50 %, vorzugsweise 30 % nicht überschreiten.

### Bezugszeichenliste

- 1: Fensterscheibe
- 10: Punkt an der äußeren Kontur der Fensterscheibe
- 11: Punkt an der äußeren Kontur der Fensterscheibe
- 12: Punkt an der äußeren Kontur der Fensterscheibe
- 13: Punkt an der äußeren Kontur der Fensterscheibe
- 14: Punkt an der äußeren Kontur der Fensterscheibe
- 15: Punkt an der äußeren Kontur der Fensterscheibe
- 16: Punkt an der äußeren Kontur der Fensterscheibe

- 2: Mitnehmer
- 20: Führungspunkt des Mitnehmers, Krafteinleitungspunkt
- 21: Führungspunkt des Mitnehmers
- 22: Führungspunkt des Mitnehmers

- 3: Grundplatte
- 30: Führungsbahn
- 31: Führungsbahn
- 32: Führungsbahn

- A - D: Punkt
- α - δ: Winkel
- X, Y, Z: Raumachsen
- R: Resultierende
- v: Geschwindigkeit
- V10, V13, ...: Geschwindigkeit bestimmter Punkte der Fensterscheibe und des Mitnehmers
- Z30a, Z30b: Weg in Z-Richtung

## Patentansprüche

1. Elektronisch gesteuerter Verletzungsschutz für einen bahngesteuerten Fensterheber,
wobei
• die Fensterscheibe aufgrund der durch die konstruktiv vorgegebene Kinematik des bahngesteuerten Fensterhebers zusätzlich zur Hauptschließrichtung Bewegungen in mindestens eine quer dazu verlaufende Raumachse ausführt,
• von einem, eine Antriebsbewegung sensierenden Sensor abgegebene Signale einer elektronischen Steuerungseinrichtung zugeführt werden, wobei in Abhängigkeit von den Sensorsignalen Steuerbefehle generiert werden, die der Steuerung des Antriebs dienen,
• über in der elektronischen Steuerungseinrichtung abgelegte Daten eine bestimmte Ansprechempfindlichkeit des Verletzungsschutzes einstellbar ist, so dass der Antrieb unter dem Einfluss vorgebbarer äußerer Einwirkungen (insb. Kräfte und/oder Beschleunigungen) abgeschaltet oder zum Reversieren veranlasst wird,
wobei
die Ansprechempfindlichkeit an die in verschiedenen Scheibenpositionen herrschenden kinematischen Verhältnisse hinsichtlich der Bewegungs- oder Kraftkomponenten in mindestens zwei Raumrichtungen angepasst ist.

2. Elektronisch gesteuerter Fensterheber nach Anspruch 1,
**dadurch gekennzeichnet, dass**
die Ansprechempfindlichkeit angepasst ist hinsichtlich der Bewegungs- oder Kraftkomponente in Z- und/oder in X- und/oder in Y-Richtung und/oder einer Schwenkbewegung um die Z-, Y- und/oder die X-Achse, wobei die X-Richtung die Fahrzeuglängsachse, die Y-Richtung die horizontale Fahrzeugquerachse und die Z-Achse die vertikale Achse repräsentiert.

3. Elektronisch gesteuerter Fensterheber nach Anspruch 1 und 2,
**dadurch gekennzeichnet, dass**
bei gegebener Leistungsfähigkeit (Ansprechempfindlichkeit) eines zur Verfügung stehenden Verletzungsschutzsystems die Kinematik des Fensterheber-Verstellsystems derart angepasst ist, dass für zwei beliebige unterschiedliche Punkte der Schließkante der Fensterscheibe ein Wert für eine charakteristische Differenz oder Verhältniszahl der Beträge der Geschwindigkeit entlang der selben Raumachse oder eines mit der Geschwindigkeit korrelierten Parameters nicht über- oder unterschritten wird, wobei dieser Wert die Grenze der Erfüllbarkeit der Funktionsbedingungen des elektronischen Verletzungsschutzsystems angibt (d. h., dass eine Fehlerkennung eines Einklemmfalls hinreichend sichergestellt und ein Überschreiten einer maximal zulässigen Einklemmkraft ausgeschlossen wird).

4. Elektronisch gesteuerter Fensterheber nach Anspruch 1 und 2,
**dadurch gekennzeichnet, dass**
bei gegebener Kinematik des Fensterheber-Verstellsystems die Leistungsfähigkeit (Ansprechempfindlichkeit) des Verletzungsschutzsystems an die in den verschiedenen Verstellpositionen der Fensterscheibe unterschiedlichen kinematischen Bedingungen angepasst ist, so dass die Bewegungsabläufe der Fensterscheibe entlang der verschiedenen Raumachsen, einschließlich der Schwenkbewegungen, nicht zum Über- bzw. Unterschreiten einer für das einzusetzende Verletzungsschutzsystem charakteristische Differenz oder Verhältniszahl führen.

5. Elektronisch gesteuerter Fensterheber nach wenigstens einem der voranstehenden Ansprüche,
**dadurch gekennzeichnet, dass**
die Verhältniszahl zweier beliebiger Beträge der Geschwindigkeit entlang derselben Raumachse oder eines mit der Geschwindigkeit korrelierten Parameters nicht größer als 0,5, vorzugsweise nicht größer als 0,3 ist.

6. Elektronisch gesteuerter Fensterheber nach wenigstens einem der voranstehenden Ansprüche,
**dadurch gekennzeichnet, dass**
die Verhältniszahl zweier beliebiger Beträge der Verstellkraft entlang derselben Raumachse oder eines mit der Verstellkraft korrelierten Parameters nicht größer als 0,5, vorzugsweise nicht größer als 0,3 ist.

7. Verfahren zum Anpassen einer elektronischen Steuerungseinrichtung eines Verletzungsschutzsystems an die Kinematik eines bahngesteuerten Fensterhebers,
**dadurch gekennzeichnet, dass**
die in Abhängigkeit von der Verstellposition der Fensterscheibe verschiedenen Bewegungsdaten ausgewählter Punkte der Fensterscheibe ermittelt werden
• durch Vektoranalyse der Führungsbahnen und des darin geführten mit der Fensterscheibe verbundenen Mitnehmers und/oder
• durch Erlernen während des Produktions- oder Prüfungsprozesses, z.B. unter Anwendung einer Lehre und unter Aufbringung von definierten äußeren Kräften und/oder
• durch Erlernen während des Verstellprozesses im Kraftfahrzeug, insbesondere um türspezifische Unterschiede und alterungsbedingte Veränderungen zu erlernen,
und dass diese Daten zur Einstellung der ortsabhängigen Ansprechempfindlichkeit des Verletzungsschutzsystems herangezogen werden.

8. Kinematik für einen bahngesteuerten Fensterheber mit elektronisch gesteuertem Verletzungsschutz, der **gekennzeichnet ist durch** die Kombination der Merkmale wenigstens eines der voranstehenden Ansprüche.

9. Bahngesteuerter Fensterheber eines Kraftfahrzeugs mit einer Verstellkinematik zur Verstellung der Fensterscheibe in mehreren Raumrichtungen,
wobei
für Punkte einer Scheibenkante,
für die in mehreren Verstellpositionen ein Einklemmen zwischen diesen Punkten der Scheibenkante und der Scheibendichtung möglich ist,
ein Umsetzungsverhältnis eines Weges eines Krafteinleitungspunktes in zumindest einer Raumrichtung zu einem Verstellweg jedes Punktes der Scheibenkante in derselben Raumrichtung einen Verhältniswert, der kleiner oder gleich 2 ist, für jede dieser mehreren Verstellposition nicht überschreitet.

10. Bahngesteuerter Fensterheber nach Anspruch 9,
**dadurch gekennzeichnet, dass**
die Raumrichtung in Z-Richtung oder in X-Richtung oder in Y-Richtung liegt, wobei die X-Richtung die Fahrzeuglängsachse, die Y-Richtung die horizontale Fahrzeugquerachse und die Z-Achse die vertikale Achse repräsentiert.

11. Bahngesteuerter Fensterheber nach Anspruch 9,
**dadurch gekennzeichnet, dass**
die Raumrichtung in der Kraftwirkungsrichtung des Antriebs liegt.

12. Bahngesteuerter Fensterheber nach einem der Ansprüche 9 bis 11,
**dadurch gekennzeichnet, dass**
der Verhältniswert vorzugsweise kleiner 1,8 und weiter bevorzugt kleiner 1,5 ist.

13. Bahngesteuerter Fensterheber nach einem der Ansprüche 9 bis 12,
**dadurch gekennzeichnet, dass**
das Umsetzungsverhältnis einen Minimalwert von 0,3, vorzugsweise von 0,5 nicht unterschreitet.

14. Bahngesteuerter Fensterheber nach einem der Ansprüche 9 bis 13,
**dadurch gekennzeichnet, dass**
für Punkte der Scheibenkante, für die ein Einklemmen zwischen dem jeweiligen Punkt und der Scheibendichtung in der betreffenden Verstellposition nicht möglich ist, diese Punkte durch ein Bauelement der Kraftfahrzeugtür, insbesondere durch eine Türbrüstung oder durch eine Scheibendichtung, für den Verletzungsschutz verdeckt sind.

15. Bahngesteuerter Fensterheber nach einem der Ansprüche 9 bis 14, mit einer elektronischen Steuerungseinrichtung zur Detektion eines Einklemmfalls,
**dadurch gekennzeichnet, dass**
für Verstellpositionen in denen das Umsetzungsverhältnis den Verhältniswert überschreitet,
durch eine Elektronik der Einklemmfall anhand einer elektrischen oder mechanischen Systemantwort detektierbar ist.

16. Bahngesteuerter Fensterheber nach einem der Ansprüche 9 bis 15,
**gekennzeichnet durch**
Führungsbahnen, die derart ausgestaltet sind, dass
für Verstellpositionen in denen das Umsetzungsverhältnis den Verhältniswert überschreitet,
ein auf die Scheibe **durch** den Einklemmfall wirkendes Drehmoment **durch** die Führungsbahnen abgestützt wird.

17. Bahngesteuerter Fensterheber nach einem der Ansprüche 9 bis 16,
**dadurch gekennzeichnet, dass**
für Verstellpositionen in denen das Umsetzungsverhältnis den Verhältniswert überschreitet,
die Verstellkraft durch eine Elektronik begrenzt ist.

18. Bahngesteuerter Fensterheber nach einem der Ansprüche 9 bis 16,
**dadurch gekennzeichnet, dass**
für Verstellpositionen in denen das Umsetzungsverhältnis den Verhältniswert überschreitet,
die Verstellgeschwindigkeit durch eine Elektronik reduziert ist.

19. Bahngesteuerter Fensterheber eines Kraftfahrzeugs mit einer Verstellkinematik zur Verstellung der Fensterscheibe in mehreren Raumrichtungen, insbesondere nach einem der Ansprüche 9 bis 18,
wobei
für Punkte einer Scheibenkante,
für die in mehreren Verstellpositionen ein Einklemmen zwischen diesen Punkten der Scheibenkante und der Scheibendichtung möglich ist,
ein Umsetzungsverhältnis eines Weges eines Krafteinleitungspunktes in zumindest einer Raumrichtung zu einem Verstellweg jedes Punktes der Scheibenkante in derselben Raumrichtung einen Verhältniswert, für jede dieser mehreren Verstellpositionen nicht überschreitet, wobei
der Verhältniswert aus dem Verhältnis einer maximal zulässigen Einklemmkraft an der Scheibenkante und einer am Krafteinleitungspunkt minimal sensierbaren Kraft für den Einklemmfall gebildet ist.
